# EUROPÄISCHE PATENTSCHRIFT

(11) **EP 3 092 421 B1**
(45) Veröffentlichungstag und Bekanntmachung des Hinweises auf die Patenterteilung: **10.10.2018**
(21) Anmeldenummer: 14830785.3
(22) Anmeldetag: 16.12.2014
(51) Int. Cl.: F16F 9/53

(54) **VENTIL FÜR EINE MAGNETORHEOLOGISCHE FLÜSSIGKEIT**
VALVE FOR MAGNETORHEOLOGICAL FLUID
VALVE POUR FLUIDE MAGNETORHEOLOGIQUE

(30) Priorität: 18.12.2013 CZ 20131026
(43) Veröffentlichungstag der Anmeldung: 16.11.2016
(73) Patentinhaber: Vysoké ucení Technické v Brne, 601 90 Brno (CZ)
(72) Erfinder: MAZUREK, Ivan, CZ-60200 Brno (CZ); ROUPEC, Jakub, CZ-61200 Brno (CZ); STRECKER, Zbynek, CZ-76801 Jankovice (CZ)
(74) Vertreter: Markes, Libor
(86) Internationale Anmeldenummer: PCT/CZ2014/000157
(87) Internationale Veröffentlichungsnummer: WO 2015/090256

(56) Entgegenhaltungen:
- WO-A1-2008/024957
- CN-A- 103 062 146
- US-B1- 6 726 740
- US-B2- 6 629 358
- Johan Moulin: "Elaboration et caractérisation de composites métal-ferrite nanostructurés, pour applications en moyennes et hautes fréquences", , 13. März 2008 (2008-03-13), XP055180802, Gefunden im Internet: URL:https://tel.archives-ouvertes.fr/tel-0 0263878/document [gefunden am 2015-04-01]

## Beschreibung

Die vorliegende Erfindung betrifft ein Ventil für eine magnetorheologische Flüssigkeit, das zumindest eine gespeiste Magnetspule aufweist, die in einem magnetisch leitenden Körper einen Magnetkreis bildet.

In gesteuerten hydraulischen Systemen werden elektromagnetische Ventile benutzt, die mittels des Steuerstroms in der Ventilspule den Flüssigkeitsdurchfluss proportional regeln. Solche Ventile sind relativ aufwendig, insbesondere bei komplizierten, schnell reagierenden hydraulischen Systemen.

Eine andere, effiziente Art der Konstruktion von gesteuerten hydraulischen Systemen wurde durch die magnetorheologischen Flüssigkeiten ermöglicht. Diese sind hochkonzentrierte Suspensionen von kleinen ferromagnetischen Partikeln in einer Trägerflüssigkeit. Der magnetorheologische Effekt tritt in der Flüssigkeit ein, wenn sie der Wirkung eines Magnetfelds ausgesetzt ist. Die ursprünglich gleichmäßig verteilten Partikeln werden unter Einfluss eines homogenen Magnetfelds zu magnetischen Dipolen und bilden kettenförmige Strukturen in Richtung der Kraftlinien des Magnetfelds. Dieser Effekt hat eine Änderung gewisser Eigenschaften der Flüssigkeit zur Folge, wie der scheinbaren Viskosität und der Fließgrenze. Die Flüssigkeit verhält sich dann wie eine viskose, plastische Masse.

Wenn die magnetische Kraft nachlässt, schlägt der Prozess um, die Partikeln zerstreuen sich wieder in der Flüssigkeit, und diese nimmt die ursprünglichen Eigenschaften an. Auf diese Weise kann mittels eines Magnetfelds die scheinbare Viskosität, und dadurch der Widerstand der Flüssigkeit beim Fluss durch das Ventil bzw. durch den dem Magnetfeld ausgesetzten Spalt reguliert werden.

Durch Verwendung des beschriebenen magnetorheologischen Effekts in verschiedenen Teilen eines mit einer MR-Flüssigkeit gefüllten hydraulischen Systems kann also der Durchfluss ebenso reguliert werden, wie mit elektrisch gesteuerten Ventilen. Der Gesamtaufwand auf die Konstruktion eines solchen Systems kann beim Einsatz von MR-Teilen wesentlich niedriger sein, weil sie keine genauen mechanischen Teile benötigt. Die MR-Ventile finden einen großen Einsatz z.B. in gesteuerten hydraulischen Vibrationsdämpfern. Das Dokument WO2008024957 bildet ebenfalls Stand der Technik.

Es ist aber die lange Reaktionszeit der MR-Ventile, was deren massigen Einsatz in dynamischen Systemen limitiert. Die Fähigkeit einer extrem schnellen Antwort ist hier dabei eine der wichtigsten Anforderungen. Die Reaktionszeit bzw. Ausgangszeitkonstante ist für die empfindlichen dynamischen Systeme als Zeit T definiert, in der das System in Reaktion auf einen Einheitssprung einer Eingangsgröße 63,2 % vom Endwert der Ausgabegröße im Dauerzustand erreicht. Die Reaktionszeit der marktüblichen MR-Ventile liegt gegenwärtig in einer Größenordnung von Zehner bis Hunderter ms, was deren Einsatz in schnellen, regulierten Systemen ausschließt. Die Ausgangszeitkonstante eines Ventils sollte für eine effektive Regelung eines Systems nicht höher sein als 1/10 des Kehrwerts der größten regulierten Frequenz des Systems. Falls die Ausgangszeitkonstante des Ventils höher ist, wird die Regelung unwirksam.

Viele Forscherteams befassten sich mit Messungen der Ausgangszeitkonstante von Ventilen, insbesondere bei Dämpfern. In einem Artikel des Xinchung-Forscherteams, *s.* XINCHUN, G, G. PENGFEI and O. JINGPING. Study of the response time of MR dampers. In: Proc. SPIE 7493. Weihai, China, 2009. DOI: 10.1117/12.840217*,* steht, dass eine Ausgangszeitkonstante eines MR-Dämpfers mit maximaler Dämpfungskraft von 270 kN gemessen wurde. (Es handelte sich um einen Dämpfer seismischer Vibrationen von Bauwerken.) Die Ausgangszeitkonstante wurde, abhängig vom Stromwert am Anfang und am Ende und von der Kolbengeschwindigkeit, im Bereich zwischen 160 und 240 ms gemessen.

Nach dem umfassenden und häufig zitierten Artikel des Koo-Teams s. KOO, J. H., F. D. GONCALVES and M. AHMADIAN. A comprehensive analysis of the response time of MR dampers. Smart Mater. Struct. 2006, roč. 15, Nr. 2*.* wurde die Gesamtausgangszeitkonstante des marktüblichen, für Kraftwagen bestimmten Dämpfers Lord Motion Master® beim Erreichen von 95 % des Endwerts der Ausgangsgröße in Höhe von 20 ms gemessen.

Die Zeitkonstante der MR-Dämpfer hängt von deren Konstruktion und von der Art deren Steuerung ab. Die Ursachen der Verzögerung von MR-Einrichtungen hat das Maas-Team beschrieben. S. MAAS, J. and D. GÜTH. Experimental Investigation of the Transient Behavior of MR Fluids. In: ASME Conference on Smart Material, Adaptive Structures and Intelligent System. Scottsdale, Arizona, USA, ASME, 2011. ISBN 978-0-7918-5471-6*.*

Als Hauptursachen, die sich an der Verzögerung kumulativ beteiligen, wurden die folgenden identifiziert:
4. Zeitantwort der MR-Flüssigkeit
5. Induktivität der Spule des MR-Dämpfers
6. Wirbelströme im Kern

Die Zeitantwort der MR-Flüssigkeit ist durch die Polarisation der Eisenpartikeln in der MR-Flüssigkeit und deren Gruppierung in Ketten verursacht, sobald die MR-Flüssigkeit dem Magnetfeld ausgesetzt wird. Diese Verzögerung, die, abhängig von der Art der Flüssigkeit und der Art und Weise der Messung, in Grenzen von ca 0,45 bis 1,30 ms liegt, benachteiligt die Funktion des Systems, auch bei Regulierung von Hochfrequenzsystemen.

Der zweite Faktor, d. h. die Verzögerung infolge des Verlaufs der magnetischen Induktion, kann durch eine passende Steuerung des Verstärkers beeinflusst werden.

Es bleibt also die letzte wesentliche Ursache der Verzögerung. Diese wird im Xinchunga-Artikel auf Grund eines einfachen FEM-Models durch Wirbelströme im Kern erläutert. Ein Ventil ist erst nach einem Zeitabschnitt völlig funktionsfähig, der für die Entwicklung der Wirbelströme notwendig ist.

Das Forscherteam der Erfinder simulierte diesen Effekt an einem gängigen MR-Ventil mit einem Eisenkern. Bei Gleichstromspeisung der Spule ist die magnetische Flussdichte gleichmäßig verteilt. Bei Wechselstromspeisung mit einer Frequenz von 200 Hz, was einer schnellen Stromumwandlung entspricht, nimmt die magnetische Flussdichte im Körper des MR-Ventils infolge der Wirbelströme kräftig zu, während die Flussdichte in dem Spalt des MR-Ventils abnimmt.

*Ein Ventil für magnetorheologische Flüssigkeit, das aus einem konventionellen Material* - *aus Eisen erzeugt ist, wird in der* CN 103062146 *beschrieben. Es ist durch einen zylinderförmigen Mantel mit Deckeln an beiden Enden gebildet, die eine Nabe klemmen, an der zwei Spulen aufgewickelt sind. Eine konische Spindel geht durch eine zentrale konische Öffnung in der Nabe. Zwischen der Nabe und der Spindel befindet sich ein Spalt, dessen Lichtweite durch axiale Verschiebung der Spindel regulierbar ist. Die magnetorheologische Flüssigkeit läuft durch den Spalt zwischen der Nabe und der Spindel. Sobald Strom in die Spindel eingeleitet wird, bildet sich ein doppelter magnetischer Kreis in dem Mantel, der Nabe und der Spindel, wobei das magnetische Feld an drei Stellen auf die Flüssigkeit in dem Spalt wirkt. Nachteilig an dem Ventil ist dessen sehr langsame Reaktion.*

*Es sind ferromagnetische Materialien mit hoher magnetischer Leitfähigkeit und niedrigem elektrischem Leitwert bekannt. Zu diesen weichmagnetischen Materialien gehören gesinterte, auf Ferrit basierte Kompositen. Z.B. in der Habilitationsarbeit von Johan Moulin: Elaboration et caracterisation de composites metal-ferrite nanostructures, pour applications en moyennes et hautes frequences* - *ENS Cachan, 2001 (Siehe https:*//*tel.archives-ouvertes.fr*/*tel-00263878*/*dokument) werden verschiedene ferromagnetische Kompositen und deren physikalische Eigenschafften aufgeführt. Es werden deren hohe elektrische Resistivität und Dämpfung der Foucaultschen Wirbelströme festgestellt. Diese Eigenschaften prädestinieren diese Materialien für den Einsatz bei mit hoher Frequenz arbeitenden Geräten.*

*Ähnliche Eigenschaften finden sich auch bei Materialien aus durch Dielektrikum getrennten ferromagnetischen Blechen, die z.B. in Transformatoren Anwendung finden.*

Es ist die Aufgabe der vorliegenden Erfindung, ein Ventil für magnetorheologische Flüssigkeiten zur Verfügung zu stellen, das die Antwortzeit des magnetorheologischen Systems wesentlich reduziert.

Diese Aufgabe wird durch ein erfindungsgemäßes Ventil für magnetorheologische Flüssigkeiten gelöst, das zumindest eine gespeiste Magnetspule aufweist, die in einem magnetisch leitenden Körper einen Magnetkreis bildet. In dem Ventil wird zumindest ein Teil des Magnetkreises durch ein Kompositmaterial gebildet, dessen spezifischer elektrischer Widerstand höher als 10⁻⁴ Ωm ist, wobei dessen relative Permeabilität, auf die Permeabilität des Vakuums bezogen,
- in Bereich von Frequenzen bis 10 kHz,
- in Bereich der magnetischen Flussdichte von 100 bis 400 mT und
- bei Temperaturen von 0°C bis 100°C
höher als 500 ist.

Der Magnetkreis des Ventils kann durch einen aus NiZn oder MnZn bestehenden Sinterstoff gebildet werden.

Der Magnetkreis des Ventils kann auch durch ferromagnetische, mit dielektrischen Schichten gesperrte Bleche gebildet werden.

In einer vorteilhaften Ausführung ist das Ventil durch einen zylinderförmigen Kern gebildet, an dem Kreisscheiben locker aufgeschoben sind, die untereinander Magnetspulen zusammenschließen. Die Scheiben und die Spulen sind mit einem Mantel umringt, zwischen den Scheiben und dem Kern sind Spalte für den Durchfluss einer magnetorheologischen Flüssigkeit gelassen, wobei der Kern, die Scheiben und der Mantel einen Magnetkreis des Ventils bilden.

Die Erfindung wird nun in Bezug auf die beiliegende Zeichnung erläutert.
Fig. 1 zeigt eine vorteilhafte Ausführung eines magnetorheologischen Ventils in Längsschnitt, und
Fig. 2 einen Abschnitt des Ventils mit markierten Kraftlinien des Magnetfelds.

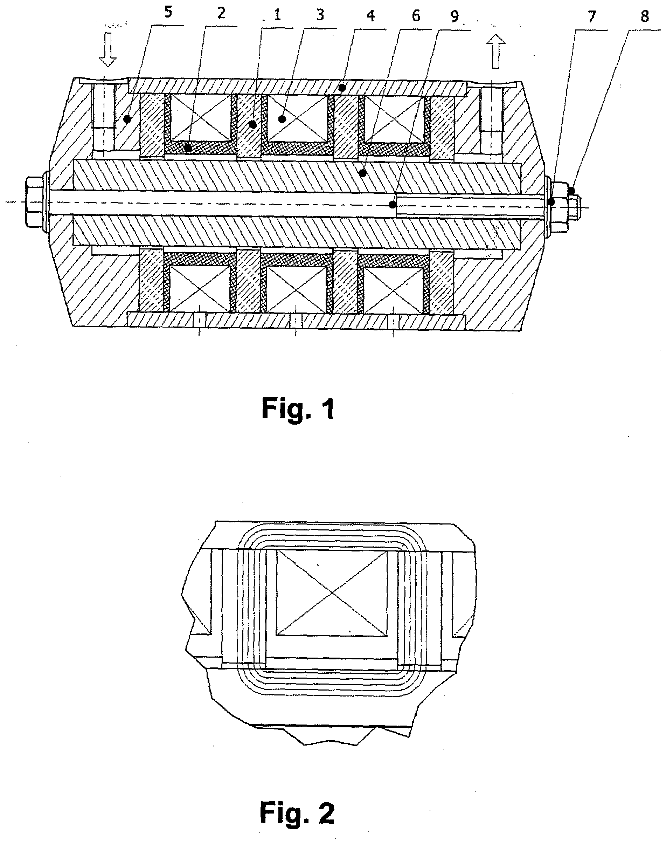

Das dreistufige Ventil für magnetorheologische Flüssigkeiten nach Fig. 1 ist durch einen zylinderförmigen Kern **1** gebildet, an dem Kreisscheiben **2** locker aufgeschoben sind, die untereinander Magnetspulen **3** zusammenschließen, welche in magnetisch nichtleitenden Kapseln **4** eingebettet sind. Die Scheiben **2** und die Spulen **3** sind mit einem röhrenförmigen Mantel **5** umringt. Diese Baugruppe ist durch Deckel **6** mittels eines Bolzens **7** mit einer Unterlegscheibe **8** und Mutter **9** zusammengeschlossen.

Die magnetorheologische Flüssigkeit tritt in das Ventil durch einen Kanal in dem linken Deckel **6.** Der Fluss der Flüssigkeit durch das Ventil wird vor allem durch die Spalte zwischen den Scheiben **2** und dem Kern **1** gedämmt. Die Flüssigkeit tritt aus dem Ventil durch einen Kanal in dem rechten Deckel **6.** Wie aus Fig. 2 hervorgeht, geht der durch die Spulen **3** erzeugte Magnetkreis durch den Kern **1,** durch die Scheiben **2** und ist durch den Mantel **5** abgeschlossen. Wenn die Spulen **3** gespeist sind, entsteht ein Magnetfeld, dessen Kraftlinien in Fig. 2 markiert sind. Die dichten Kraftlinien, die den Spalt senkrecht zur Bewegung der Flüssigkeit schneiden, bewirken die Zunahme der scheinbaren Viskosität der Flüssigkeit, und dadurch wird deren Fluss durch das Ventil gebremst.

Der Kern **1,** die Kreisscheiben **2** und der Mantel **5** sind aus einem Material mit einer hohen magnetischen Leitfähigkeit, aber mit einer niedrigen elektrischen Leitfähigkeit hergestellt. Es handelt sich um das Material Siferrit N95, das die folgenden Parameter aufweist:
Relative Permeabilität: 2300
unter den folgenden Bedingungen:
   Frequenz des Magnetfelds: 10 kHz,
   magnetische Flussdichte: 250 mT,
   Temperatur des Materials: 20°C,
   spezifischer elektrischer Widerstand: 8 Ωm.

Die gleichen und ähnlichen Eigenschaften, wie in Anspruch 1 angeführt, weist eine Reihe von gesinterten Materialien mit einer allgemeinen Zusammensetzung NiZn, MnZn auf, und auch Kompositmaterialien, die ähnlich wie Transformatorkerne durch mit dielektrischen Schichten gesperrte ferromagnetische Bleche gebildet sind.

Nachstehend werden Parameter des bisher in den magnetorheologischen Ventilen benutzten Materials mit dem empfohlenen Material verglichen: Spezifischer elektrischer Widerstand von Stahl beträgt 10⁻⁷ Ωm, dagegen beträgt spezifischer elektrischer Widerstand von Ferriten 10 Ωm. Der Unterschied macht also ungefähr 8 Größenordnungen. Dabei erweist sich der spezifische elektrische Widerstand bei der unteren Grenze von 10⁻⁴ Ωm für schnelle Ventile als völlig ausreichend. Andererseits wird die relative Permeabilität für Stahl in Höhe von 7800 und für Ferrit in Höhe von 1000 bis 5000 angegeben, also ist der Unterschied minimal. Dabei zeigt sich die relative Permeabilität bei den empfohlenen Materialien für schnelle Ventile sogar bei der unteren Grenze von 500 als ausreichend.

Das entworfene Ventil für magnetorheologische Flüssigkeit kann selbstständig in einen regulierten Hydraulikkreis, oder als Bestandteil eines Kolbens für einen Schwingugsdämpfer eingebaut werden, was eine semiaktive Regulierung eines federnden Systems zur Vibrationsdämpfung mit einer Frequenz bis zu 100 Hz ermöglicht.

## Patentansprüche

1. Ventil für eine magnetorheologische Flüssigkeit, das zumindest eine gespeiste Magnetkernspule aufweist, die in einem magnetisch leitenden Körper einen Magnetkreis bildet, **dadurch gekennzeichnet, dass** zumindest ein Teil des Magnetkreises durch ein Kompositmaterial gebildet ist, dessen spezifischer elektrischer Widerstand höher als 10⁻⁴ Ωm ist, wobei dessen relative Permeabilität, auf die Permeabilität des Vakuums bezogen,
- in Bereich von Frequenzen bis 10 kHz,
- in Bereich der magnetischen Flussdichte von 100 bis 400 mT und
- bei Temperaturen von 0°C bis 100°C
höher als 500 ist.

2. Das Ventil nach Anspruch 1, **dadurch gekennzeichnet, dass** der Magnetkreis des Ventils durch einen aus NiZn oder MnZn bestehenden Sinterstoff gebildet ist.

3. Das Ventil nach Anspruch 1, **dadurch gekennzeichnet, dass** der Magnetkreis des Ventils durch ferromagnetische Bleche gebildet ist, die mit dielektrischen Schichten gesperrt sind.

4. Das Ventil nach mindestens einem der vorgehenden Ansprüche, **dadurch gekennzeichnet, dass** es durch einen zylinderförmigen Kern (1) gebildet ist, an dem Kreisscheiben (2) locker aufgeschoben sind, die untereinander Magnetkernspulen (3) zusammenschließen, wobei die Scheiben (2) und die Spulen (3) mit einem Mantel (5) umringt sind und zwischen den Scheiben (2) und dem Kern (1) Spalte für den Durchfluss einer magnetorheologischen Flüssigkeit gelassen sind, und wobei der Kern (9), die Scheiben (2) und der Mantel (5) einen Magnetkreis des Ventils bilden.

## Claims

1. A valve for a magnetorheological fluid, comprising at least one powered induction coil forming a magnetic circuit in a magnetically conductive body, **characterised in that** at least part of the magnetic circuit is formed by a composite material whose specific electric resistivity is higher than 10⁻⁴ Ωm, whereas its relative permeability in comparison to vacuum permeability is higher than 500
- within the frequency range of up to 10 kHz,
- within the magnetic induction range from 100 to 400 mT and
- within the temperature range from 0°C to 100°C.

2. The valve of claim 1, **characterised in that** its magnetic circuit is made of sintered material composed of: MnZn or NiZn.

3. The valve of claim 1, **characterised in that** the magnetic circuit of the valve comprises ferromagnetic sheet metal interlaid with dielectric layers.

4. The valve according to at least one of the previous claims 1 - 3, **characterised in that** it comprises a cylindrical core (1), with discs (2) slid on it with mutual clearance, closing induction coils (3) between each two of them, whereas the discs (2) and the coils (3) are surrounded by a casing (5) with slots left between the discs (2) and the core (1) for the magnetorheological fluid flow, and whereas the core (1), the discs (2) and the casing (5) form the magnetic circuit of the valve.

## Revendications

1. Soupape pour liquide magnétorhéologique qui renferme au moins une bobine d'induction alimentée qui produit dans un corps magnétiquement conductif un circuit magnétique, **caractérisé en ce que** au moins une partie du circuit magnétique est composé d'un matériau composite dont la résistivité électrique spécifique est supérieure à 10⁻⁴ Ωm, cependant sa perméabilité relative par rapport à la perméabilité du vide est
- dans la gamme de fréquence jusqu'à 10 kHz,
- dans la gamme de l'induction magnétique 100 jusqu'à 400 mT et
- sous la température de 0°C au 100°C
supérieur au 500.

2. Soupape selon la revendication 1, **caractérisé en ce que** son circuit magnétique est constitué d'un matériau fritté avec la composition: MnZn ou NiZn.

3. Soupape selon la revendication 1, **caractérisé en ce que** le circuit magnétique de la soupape est constitué de tôles ferromagnétiques qui sont interfoliées par des couches diélectriques.

4. Soupape selon au moins d'une des revendications préalables, **caractérisé en ce que** elle est constituée d'un noyau cylindrique (1), sur lequel sont emmanchés avec un jeu des disques (2) qui renferment entre eux des bobines d'induction (3), cependant les disques (2) et les bobines (3) sont enrobés par une enveloppe (5) et entre les disques (2) et le noyau (1) sont laissées des fentes pour l'écoulement de la liquide magnétorhéologique, et cependant le noyau (1), les disques (2) et l'enveloppe (5) forment le circuit magnétique de la soupape.
